# EUROPEAN PATENT SPECIFICATION

(11) **EP 1 242 488 B1**
(45) Date of publication and mention of the grant of the patent: **25.05.2005**
(21) Application number: 00993719.4
(22) Date of filing: 28.12.2000
(51) Int. Cl.: C08F 279/02, C08F 283/02, C08L 51/00, C08L 53/02, C08L 67/02, C08F 220/32

(54) **THERMOPLASTIC ELASTOMERS AND PROCESS FOR THEIR PREPARATION**
THERMOPLASTISCHE ELASTOMERE UND VERFAHREN ZU IHRER HERSTELLUNG
ELASTOMERES THERMOPLASTIQUES ET PROCEDE DE PREPARATION

(30) Priority: 05.01.2000 IT MI000006
(43) Date of publication of application: 25.09.2002
(73) Proprietor: Polimeri Europa S.p.A., 72100 Brindisi (IT)
(72) Inventor: BIGGI, Aroldo, I-20097 San Donato Milanese (IT); PAVANELLO, Donato, I-20098 San Giuliano Milanese (IT); TACCIOLI, Attilio, I-20097 San Donato Milanese (IT); MASI, Francesco, I-26866 Sant'Angelo Lodigiano (IT)
(74) Representative: De Gregori, Antonella
(86) International application number: PCT/EP2000/013371
(87) International publication number: WO 2001/049762

(56) References cited:
- DE-A- 3 924 237
- PATENT ABSTRACTS OF JAPAN vol. 016, no. 106 (C-0919), 16 March 1992 (1992-03-16) & JP 03 281654 A (NIPPON G II PLAST KK), 12 December 1991 (1991-12-12)
- PATENT ABSTRACTS OF JAPAN vol. 014, no. 014 (C-674), 12 January 1990 (1990-01-12) & JP 01 256560 A (ASAHI CHEM IND CO LTD), 13 October 1989 (1989-10-13)
- DATABASE WPI Section Ch, Week 198943 Derwent Publications Ltd., London, GB; Class A18, AN 1989-312862 XP002163799 & JP 01 230660 A (ASAHI CHEM IND CO LTD), 14 September 1989 (1989-09-14)

## Description

The present invention relates to thermoplastic elastomers and the process for their preparation.

Thermoplastic elastomers consist of "soft" polymeric chains of a varying chemical nature, bound to each other by means of thermolabile bonds.

These thermolabile bonds can be of different origins (for example vitreous, crystalline, ionic, hydrogen-bridge) and generally define groups of thermoelastomers (for example block copolymers, polyesters, olefinic copolymers, acrylates, polyurethanes) and, together with the "soft" phase, determine the characteristics of thermoelastomers.

Thermoelastomers of the block copolymer group are characterized by the presence of bonds of a vitreous nature deriving from the presence of polystyrene chain blocks, whereas the "soft" part, forming part of the same polymeric chain, generally consists of polybutadiene or polyisoprene or butadiene-styrene copolymers.

A general characteristic of the synthesis of this group of thermoelastomers is of forming polymeric chains in which the vitreous ("hard") part can be situated at the chain-ends.

As a result of this, the central "soft" part, consisting of the polydiene, may be very long, consequently guaranteeing the elasticity of the product even at high deformations. This characteristic cannot be obtained with other groups of thermoelastomers as the various and specific syntheses provide products in which the polymeric chain contains the thermolabile bonds internally (and not at the ends), causing alternating sequences with a very small average length of the "soft" chain.

Another characteristic of block thermoelastomers derives from the fact that the "soft" part of the chain can consist of polydienes, extremely valid for maintaining the elasticity even at low temperatures. The problems of this group of thermoelastomers derive from the high temperatures where, on the contrary, the other groups are generally better. These problems are of a double nature arising on the one hand from the presence of double bonds along the "soft" chain, and the low T_{g} of polystyrene on the other.

For example JP-A-03281654 discloses a composition comprising a polyester resin, a block copolymer obtained starting from an alkenyl aromatic compound and, diene monomer, an olefin polymer having an epoxy or oxazolinyl group and an epoxy compound.

A group of thermoplastic elastomers has now been found, which at least partly overcomes the above drawbacks.

In accordance with this, the present invention relates to a composition of thermoplastic elastomers consisting of:
(a) from 95 to 65% by weight, of polyvinyl arene/polydiene block copolymers;
(b) polyethylene terephthalate, in a quantity of 5 to 35% by weight by weight;
(c) acrylate having general formula (I) 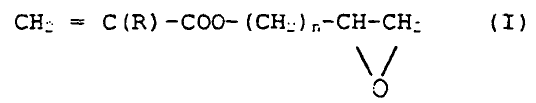 wherein R is selected from H and CH₃, n is an integer from 0 to 4, in a quantity of 0.05 to 1% by weight;
the sum of (a), (b) and (c) being equal to 100.

The block copolymers (a) consist of a "hard" phase and a "soft" phase. The "hard" phase usually consists of a polyvinyl arene, preferably polystyrene, whereas the "soft" phase usually consists of a polydiolefin, preferably selected from polybutadiene and polyisoprene. These block copolymers are ordered either in a sequential (linear) or branched (stellar) manner, with usually from 2 to 4 blocks and a varying number of branchings. The blocks,

More preferably, the present invention relates to a composition of thermoplastic elastomers consisting of:
(a) from 90 to 70% by weight of polyvinyl arene/polydiene block copolymers;
(b) polyethylene terephthalate in a quantity of 10 to 30% by weight;
(c) glycidyl methacrylate in a quantity of 0.1 to 0.7% by weight.
also when repeated, can have varying molecular weights. In any case the total molecular weights vary from 70,000 to 250,000. In the preferred embodiment the block copolymers (a) are styrene/butadiene/styrene block copolymers (SBS rubber).

In particular, the polyvinyl arene is polystyrene and polydiene is polybutadiene.

Polyethylene terephthalate (PET) is the polymer deriving from the polycondensation (esterification) between terephthalic acid and ethylene glycol. In the present invention recycled PET deriving from recuperated bottles, was used.

As far as the acrylate (I) is concerned, in the preferred embodiment this is glycidyl methacrylate (R = CH₃, n = 1).

In the preferred embodiment, the molar ratio between compound (c) in general formula (I) and polyethylene terephthalate (b) ranges from 0.5 to 4, preferably from 0.7 to 3.1.

A further object of the present invention relates to a process for the preparation of the composition of thermoplastic elastomers of the present invention by means of extrusion under vacuum with a twin-screw extruder, which comprises:
(i) feeding (a), (b) and (c) into an extruder and maintaining the three components in the extruder at a temperature ranging from 220°C to 280°C, preferably from 240°C to 260°C, with residence times ranging from 20 to 80 seconds, preferably from 30 to 60 seconds, thus obtaining a thermoplastic elastomer;
(ii) rapidly cooling the thermoplastic elastomer obtained in step (i) and its subsequent recovery.

In the preferred embodiment, it is preferable to carry out a treatment step of the rubber and PET, prior to the above steps, in order to eliminate the humidity possibly present in the polymers, and disperse the acrylate as much as possible.

The process described above allows the PET to be grafted to the SBC rubber. This probably occurs (step i) by means of a first functionalization step of the rubber with the acrylate and subsequent reaction of the rubber thus functionalized with the PET chain-ends (-OH and -COOH). Step (ii) comprises rapid cooling, to 120-160°C to avoid secondary reactions.

The process of the present invention allows the production of thermoplastic elastomers having excellent elastic properties (the best within the group of thermoplastic rubbers) and good tensile characteristics, with a considerable improvement in resistance to fatigue, temperature and exposure to UV rays.

The following examples provide a better understanding of the present invention. It should be noted that the compositions are antioxidant-free.

### EXAMPLES

- The polyethylene terephthalate used is characterized by a number average molecular weight (Mn) of about 25,000.
- SOL T 166® is a block copolymer (SBC) of the SBS group having the following characteristics: (a) it is linear, (b) it consists of 3 blocks in sequence (polystyrene - polybutadiene - polystyrene) where the two polystyrene blocks are more or less the same, (c) it has a molecular weight (Mn) of about 77,000, (d) the polybutadiene represents about 70% by weight of the polymer.

The method used for the preparation of these elastomers can be subdivided into two steps.

In the first step the rubber is "prepared" for the subsequent phase by means of two successive operations:
a) drying (forced ventilation oven, 6 hours at 50°C) in order to eliminate the humidity present in the rubber;
b) dispersion of the GMA in the rubber treated in step (a) and its "digestion" initially using a fast mill for 5 minutes at a low temperature and subsequently a drum rotator for 24 hours; the purpose of this operation is to ensure the optimum dispersion of the GMA and absorb it onto the rubber granules.

For the preparation of the samples indicated in the table, three different compositions were prepared by dispersing three different quantities of GMA in the rubber, in order to obtain rubber compositions containing 0.2, 0.3 and 0.5% by weight of GMA.

The PET on the other hand is dried in an air circulation oven for 2 hours at 120°C.

In the second phase (reactive blending in the extruder), the polymers thus treated are charged into weight distributors situated at the first inlet of the twin-screw laboratory extruder characterized by a screw having a diameter of 35 mm with l/d equal to 32, adopting the following conditions:
- thermal profile: brief initial thermal shock to speed up the reaction (255°C set), followed by cooling the material to 150°C (set) at the head of the extruder;
- flow-rate of 10 kg/hour;
- screw revs: 180/min.;
- extrusion carried out under vacuum.

Under the above conditions, the machine allows a contact time of the materials (residence in the machine) of about 40 seconds.

The different percentage compositions of the tests indicated were obtained by varying the percentage flow-rate of the single (2) weight distributors, so as to obtain 4 compositions with 4 different composition ratios, wherein the PET is present in quantities of 10, 15, 20 and 30% by weight, respectively.

The table measurements were effected according to techniques well known in the field. The measurements with the Vicat apparatus, on the contrary, were effected using internal methods. The following considerations can be obtained from the data of the table:
1) The tensile properties (modulus, ultimate tensile stress, ultimate elongation) are comparable to those of the starting product and in some cases even higher (examples with a low PET content).
2) The elasticity is more or less analogous or slightly lower: in fact the tension measurement set after deformation (deformation percentage which the sample is not able to recover) is similar. When measured on the other hand as the bounce of a falling body, the elastic response deteriorates slightly even with low PET contents.
3) The aging resistance by exposure to ultraviolet rays (WOM) in some cases (20% and 30% of PET) is triplicate: in fact more than triple the time (over 48 hours against 16 hours of the rubber as such) is necessary for causing an analogous percentage decrease in characteristics. Up to 15% of PET, the improvements are not significant.
4) The temperature resistance (VICAT measurements) increases with an increase in the percentage content of PET, which means that it is the modulus of the modified rubbers which has a better resistance to temperature increases, with an increase in their PET content.
5) There is a considerable increase in the tear strength and repeated flexural strength: the former increases with an increase in the PET % up to almost triple values, whereas the latter already has a maximum peak with low PET contents (after 100,000 cycles the incision has not moved - from 3 mm it has become 3.1 mm) and then drops again, with high PET contents, to values which are still much higher (the worst test-sample - 30% PET - breaks after over 25,000 cycles against the 1,500 cycles of the rubber as such).

In conclusion, the tensile and elastic properties of the compositions of the present invention substantially remain unvaried and there is a significant improvement in the resistance to fatigue, temperature and exposure to UV rays.

**TABLE 1**

| | | | SOL T 166 modified with PET | | | | |
|---|---|---|---|---|---|---|---|
| SOL T 166 % | | 100 | 89.82 | 84.75 | 79.84 | 69.65 | 69.86 |
| PET % | | - | 10 | 15 | 20 | 30 | 30 |
| Molar ratio GMA/PET | | - | 3.1 | 3 | 1.4 | 2 | 0.8 |
| Modulus 300% | MPa | 4.1 | 6.2 | 6.8 | 8.1 | 8.7 | 10.2 |
| Ult.tensile strength | MPa | 10.9 | 12.7 | 13.1 | 10.8 | 9.9 | 10.1 |
| Ultimate energy | MJ/m³ | 31.8 | 58.6 | 60.3, | 54.2 | 47.4 | 33.3 |
| Ultimate elongation | % | 694 | 830 | 816 | 717 | 640 | 413 |
| Tension set instant. | % | 15 | 15 | 15 | 15 | 20 | 20 |
| Elastic yield zwick | % | 74.4 | 63 | 62.4 | 61.6 | 58 | 57.8 |
| Tear strength | N/mm | 29 | 41 | 46.3 | 54.4 | 68.2 | 74 |
| Vicat 500g/cm³ | °C | 96 | 104 | 107 | 114 | 138 | 140 |
| Ross flex | Kcycles | 1.5 | >100 | >100 | >100 | 32.6 | 25.2 |
| Ross flex | mm | 15 | 3.1 | 3.7 | 8 | 15 | 15 |
| Shore A 3" | points | 64 | 78 | 79 | 83 | 89 | 90 |
| MFI 190°, 21.6 kg | g/10' | 50 | 27 | 22 | 12 | 6 | 2 |
| 16 hrs in WOM ultimate tensile strength variation | % | -25 | -24 | -22 | 1 | 1.3 | -20 |
| 48 hrs in WOM ultimate tensile strength variation | % | - | - | - | -5 | -4.5 | - |

## Claims

1. A composition of thermoplastic elastomers consisting of:
(a) from 95 to 65% by weight of polyvinylarene/polydiene block copolymers;
(b) polyethylene terephthalate, in a quantity of 5 to 35% by weight;
(c) acrylate having general formula (I) 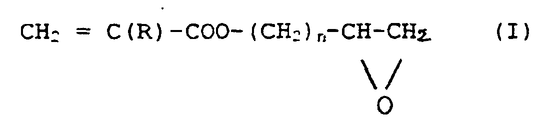 wherein R is selected from H and CH₃, n is an integer from 0 to 4, in a quantity of 0.05 to 1% by weight;
the sum of (a), (b) and (c) being equal to 100.

2. The composition according to claim 1, consisting of:
(a) from 90 to 70% by weight of polyvinylarene/polydiene block copolymers;
(b) polyethyleneterephthalate, in a quantity of 10 to 30% by weight;
(c) glycidyl methacrylate, in a quantity of 0.1 to 0.7% by weight.

3. The composition according to claim 1, wherein the polyvinylarene is polystyrene and the polydiene is polybutadiene.

4. The composition according to claim 1, wherein in the compound having general formula (I) R = CH₃, n = 1.

5. The composition according to claim 1, wherein the molar ratio between (c) and (b) ranges from 0.5 to 4.

6. The composition according to claim 5, wherein the molar ratio between (c) and (b) ranges from 0.7 to 3.1.

7. A process for the preparation of the composition of thermoplastic elastomers according to claim 1, which comprises:
(i) feeding (a), (b) and (c) into an extruder and maintaining the three components in the extruder at a temperature ranging from 220°C to 280°C, with residence times ranging from 20 to 80 seconds, thus obtaining a thermoplastic elastomer;
(ii) rapidly cooling the thermoplastic elastomer obtained in step (i) and its subsequent recovery.

8. The process according to claim 7, **characterized in that** the three components are maintained in the extruder at a temperature ranging from 240°C to 260°C with a residence time ranging from 30 to 60 seconds.

## Patentansprüche

1. Zusammensetzung thermoplastischer Elastomere, bestehend aus:
(a) 95 bis 65% Gew.-% Polyvinylaren/Polydien-Blockcopolymere;
(b) Polyethylenterephthalat in einer Menge von 5 bis 35 Gew.-%;
(c) Acrylat mit der allgemeinen Formel (I) 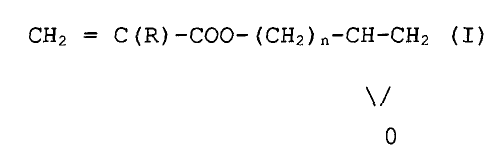 worin R aus H und CH₃ ausgewählt ist, n eine ganze Zahl von 0 bis 4 ist, in einer Menge von 0,05 bis 1 Gew.-%;
wobei die Summe aus (a), (b) und (c) gleich 100 ist.

2. Zusammensetzung nach Anspruch 1, bestehend aus:
(a) 90 bis 70 Gew.-% Polyvinylaren/Polydien-Blockcopolymere;
(b) Polyethylentherephthalat in einer Menge von 10 bis 30 Gew.-%;
(c) Glycidylmethacrylat in einer Menge von 0,1 bis 0,7 Gew.-%.

3. Zusammensetzung nach Anspruch 1, wobei das Polyvinylaren Polystyrol ist und das Polydien Polybutadien ist.

4. Zusammensetzung nach Anspruch 1, wobei in der Verbindung mit der allgemeinen Formel (I) R = CH₃, n = 1.

5. Zusammensetzung nach Anspruch 1, wobei das molare Verhältnis zwischen (c) und (b) von 0,5 bis 4 reicht.

6. Zusammensetzung nach Anspruch 5, wobei das molare Verhältnis zwischen (c) und (b) von 0,7 bis 3,1 reicht.

7. Verfahren zur Herstellung der Zusammensetzung thermoplastischer Elastomere nach Anspruch 1, umfassend:
(i) Einspeisen von (a), (b) und (c) in einen Extruder und Halten der drei Komponenten in dem Extruder bei einer Temperatur im Bereich von 220°C bis 280°C mit Verweilzeiten im Bereich von 20 Sekunden bis 80 Sekunden, wodurch ein thermoplastisches Elastomer erhalten wird;
(ii) schnelles Abkühlen des in Stufe (i) erhaltenen thermoplastischen Elastomers und seine nachfolgende Gewinnung.

8. Verfahren nach Anspruch 7, **dadurch gekennzeichnet, dass** die drei Komponenten in dem Extruder bei einer Temperatur im Bereich von 240°C bis 260°C mit einer Verweilzeit im Bereich von 30 Sekunden bis 60 Sekunden gehalten werden.

## Revendications

1. Composition d'élastomères thermoplastiques constituée:
(a) de 95 à 65% en poids de copolymères à blocs polyvinylarène/polydiène ;
(b) de polyéthylène térephtalate, en une quantité de 5 à 35% en poids ;
(c) d'acrylate ayant la formule générale (I) 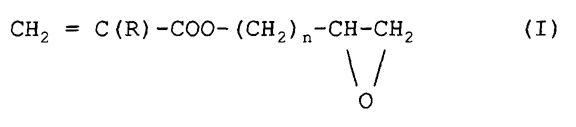 où R est choisi entre H et CH₃, n est un nombre entier de 0 à 4, en une quantité de 0,05 à 1% en poids ;
la somme de (a), (b) et (c) étant égale à 100.

2. Composition selon la revendication 1, constituée :
(a) de 90 à 70% en poids de copolymères à blocs polyvinylarène/polydiène ;
(b) de polyéthylène térephtalate, en une quantité de 10 à 30% en poids ;
(c) de méthacrylate de glycidyle, en une quantité de 0,1 à 0,7% en poids.

3. Composition selon la revendication 1, dans laquelle le polyvinylarène est le polystyrène et le polydiène est le polybutadiène.

4. Composition selon la revendication 1, dans laquelle, dans le composé ayant la formule générale (I), R = CH₃, n = 1.

5. Composition selon la revendication 1, dans laquelle le rapport molaire entre (c) et (b) se situe dans la plage de 0,5 à 4.

6. Composition selon la revendication 5, dans laquelle le rapport molaire entre (c) et (b) se situe dans la plage de 0,7 à 3,1.

7. Procédé de préparation de la composition d'élastomères thermoplastiques selon la revendication 1, lequel comprend les étapes consistant à :
(i) charger (a), (b) et (c) dans une extrudeuse et maintenir les trois composants dans l'extrudeuse à une température dans la plage de 220°C à 280°C, avec un temps de séjour dans la plage de 20 à 80 secondes, pour ainsi obtenir un élastomère thermoplastique ;
(ii) refroidir rapidement l'élastomère thermoplastique obtenu à l'étape (i) avant de le récupérer.

8. Procédé selon la revendication 7, **caractérisé en ce que** les trois composants sont maintenus dans l'extrudeuse à une température dans la plage de 240°C à 260°C avec un temps de séjour dans la plage de 30 à 60 secondes.
